# EUROPEAN PATENT APPLICATION

(11) **EP 4 723 215 A1**
(43) Date of publication of application: **08.04.2026**
(21) Application number: 25204349.2
(22) Date of filing: 24.09.2025
(51) Int. Cl.: H01M 4/36, H01M 4/58, H01M 4/525

(54) **A POSITIVE ELECTRODE FOR LITHIUM-ION SECONDARY BATTERY AND LITHIUM-ION SECONDARY BATTERY**

(30) Priority: 07.10.2024 JP 2024175995
(71) Applicant: TOYOTA JIDOSHA KABUSHIKI KAISHA, Toyota-shi, Aichi-ken 471-8571 (JP)
(72) Inventor: SHIMIZU, Yuusuke, Aichi-ken, 471-8571 (JP)
(74) Representative: Kuhnen & Wacker Patent- und Rechtsanwaltsbüro PartG mbB

(57) **Abstract**

The teaching herein provides an electrode for a lithium-ion secondary battery with excellent input/output characteristics, using an olivine type compound and a layered rocksalt type oxide as its positive electrode active materials.

The description herein provides a positive electrode for a lithium-ion secondary battery. This positive electrode for a lithium-ion secondary battery comprises: a positive electrode current collector layer; and a positive electrode composite layer containing an olivine-type compound and a layered rocksalt-type oxide as its positive electrode active materials. The positive electrode composite layer comprises a first region on a side that is closer to a first surface of the positive electrode composite layer, the first surface being opposite to a second surface of the positive electrode composite layer facing the positive electrode current collector layer, and the first region contains the layered rocksalt-type oxide at a higher concentration.

## Description

### CROSS REFERENCE TO RELATED APPLICATIONS

This application claims priority from Japanese Patent Application No. 2024-175995 filed on October 7, 2024. The entire content of the priority application is incorporated herein by reference.

### Technical Field

The art disclosed herein relates to a positive electrode for a lithium-ion battery and the lithium-ion battery.

### Background

Positive electrode active materials, which are metal oxides containing lithium-ions, are often used in a positive electrode of lithium-ion batteries. For example, a layered rocksalt type oxide and an olivine type compound may be used.

For example, a layered rocksalt type oxide such as nickel cobalt manganese mixed oxide (NCM) have advantages of high energy density and its ability to realize a secondary battery with high power and capacity. Further, an olivine type compound such as lithium manganese iron phosphate (LMFP) has low cost and high energy density. JP 2022-138053A describes about compositing these positive electrode active materials according to their desired purpose.

### Summary

The olivine type compound and the layered rocksalt type oxide each have excellent properties as a positive electrode active material. However, when the olivine type compound is used in increased amounts, an input/output performance of the lithium-ion battery can be significantly degraded. This is thought to be attributed to low electronic conductivity of the olivine type compound and low diffusivity of lithium-ions within LMFP particles.

The description herein provides an electrode for a lithium-ion secondary battery with excellent input/output characteristics, using an olivine type compound and a layered rocksalt type oxide as its positive electrode active materials.

The description herein provides a positive electrode for a lithium-ion secondary battery. This positive electrode for a lithium-ion secondary battery comprises: a positive electrode current collector layer; and a positive electrode composite layer containing an olivine-type compound and a layered rocksalt-type oxide as its positive electrode active materials. The positive electrode composite layer comprises a first region on a side that is closer to a first surface of the positive electrode composite layer, the first surface being opposite to a second surface of the positive electrode composite layer facing the positive electrode current collector layer, and the first region contains the layered rocksalt-type oxide at a higher concentration.

The specification may also provide a lithium secondary battery comprising this positive electrode, a negative electrode, and a separator. According to this lithium-ion secondary battery, the positive electrode with the excellent input/output characteristics provides the lithium-ion secondary battery with excellent input/output characteristics.

### Brief Description of Drawings

FIG. 1 is an example of a lithium-ion secondary battery.
FIG. 2 is an example of a positive electrode composite layer of the lithium-ion secondary battery.
FIG. 3 shows a part of a structure of the positive electrode composite layer of the positive electrode fabricated in an embodiment and its evaluation results.

### Detailed Description

In one aspect of the present teachings, a positive electrode for a lithium-ion secondary battery comprises: a positive electrode current collector layer; and a positive electrode composite layer containing an olivine-type compound and a layered rocksalt-type oxide as its positive electrode active materials. The positive electrode composite layer comprises a first region on a side that is closer to a first surface of the positive electrode composite layer, the first surface being opposite to a second surface of the positive electrode composite layer facing the positive electrode current collector layer, and the first region contains the layered rocksalt-type oxide at a higher concentration.

According to this configuration, this positive electrode may comprise the first region containing the layered rocksalt-type oxide at a higher concentration on the side that is closer to the first side, which is, in other words, on the side closer to a surface of the positive electrode facing a separator. The layered rocksalt type oxide has superior electronic conductivity compared to the olivine type compound. By containing a high concentration of the layered rocksalt type oxide on the side closer to the first surface, the layered rocksalt type oxide can preferentially exchange and receive electrons. As a result, the input/output characteristics of the positive electrode are improved.

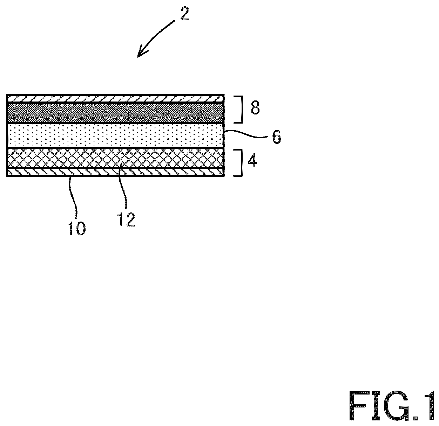

Hereinbelow, a positive electrode of a lithium-ion secondary battery and the lithium-ion secondary battery disclosed herein (hereinafter simply referred to as "secondary battery") will be described with reference to the drawings. FIG. 1 is an example of a cell of a secondary battery 2.

The term "secondary battery" as used herein refers to a battery that can be repeatedly charged and discharged by transfer of charge carriers between positive and negative electrodes. Further, the term "lithium-ion secondary battery" as used herein refers to a secondary battery that uses lithium-ions as its charge carriers and in which charge and discharge are realized by the transfer of charges accompanying lithium-ions between the positive and negative electrodes.

Further, the secondary battery has a positive terminal and a negative terminal for an electrode body, and is housed in a battery casing. The secondary battery is, for example, a lithium-ion secondary battery with a non-aqueous electrolyte as its electrolyte. A shape of the secondary battery may be cylindrical or laminated, without any specific limitation.

### (Positive electrode for secondary battery)

As shown in FIG. 1, the cell as a unit structure of a secondary battery 2 comprises a positive electrode 4, a separator 6, and a negative electrode 8. The positive electrode 4 has a sheet-shaped positive electrode current collector 10 and a positive electrode composite layer 12. The positive electrode 4 has a shape corresponding to that of the secondary battery 2.

### (Positive electrode current collector)

The positive electrode current collector 10 is not particularly limited, but is made of conductive Metals such as aluminum, aluminum Alloys, nickel, and stainless steel. The positive electrode current collector 10 is Generally in a form of a sheet having a thickness of about 100 µm or less. The positive electrode current collector 10 is typically a metal foil, more specifically an aluminum foil. The positive electrode current collector 10 is an example of a positive electrode current collector layer disclosed herein.

### (Positive electrode composite layer)

The positive electrode composite layer 12 is provided by being adhered to at least one surface of the positive electrode current collector 10. The positive electrode composite layer 12 may be provided on both sides of the positive electrode collector 10. The positive electrode composite layer 12 has a form of a layer Along surface(s) of the positive electrode collector 10.

The positive electrode composite layer 12 is configured of a positive electrode composite material. The positive electrode composite material contains positive electrode active materials. An olivine type compound and a layered rocksalt type oxide may be used as the positive electrode active materials. In the positive electrode composite layer 12, the layered rocksalt type oxide is unevenly distributed by being densely localized on a side that is closer to a particular surface. Hereinbelow, the layered rocksalt type oxide and olivine type compound will be described first, and the uneven distribution of the layered rocksalt type oxide will be described thereafter.

### (Layered rocksalt type oxide)

As the layered rocksalt type oxides, for example, one, or two or more types selected from lithium containing transition metal oxides represented by the following compositional formulas (1) and (2) may be used. These types of metal oxides adopt a layered rocksalt structure. Further, these types of metal oxides have excellent electronic conductivity.

LiNiₐCO_{b}Mn_{c}M^{l}_{w}O₂ ... (1)

(where M¹ represents one, or two or more elements selected from Mg, Ti, Nb, Fe, Cr, Si, Al, Ga, V, Zn, Cu, Sr, Mo, Zr, Sn, Ta, W, La, Ce, Pb, Bi, and Ge; and a, b, c, and w represent numbers that satisfy 0.3≤a<1, 0<b≤0.7, 0<c≤0.7, 0≤w≤0.3, and 3a+3b+3c+(valence of M¹)×w=3 in Formula (1)).

LiNi_{d}Co_{c}Al_{f}M²ₓO₂ ... (2)

(where M² represents one, or two or more elements selected from Mg, Ti, Nb, Fe, Cr, Si, Ga, V, Zn, Cu, Sr, Mo, Zr, Sn, Ta, W, La, Ce, Pb, Bi, and Ge; and d, e, f, and x represent numbers satisfying 0.4≤d<1, 0<e≤0.5, 0<f≤0.3, 0≤x≤0.3, and 3d+3e+3f+(valence of M²)×x=3 in Formula (2)).

The layered rocksalt type oxide represented by Formula (1) is a so-called LiNi-Co-Mn oxide (NCM-type oxide), and the layered rocksalt type oxide represented by Formula (2) is a so-called LiNi-Co-Al oxide (NCA-type oxide).

In NCM-based oxides represented by Formula (1), Ni, Co, and Mn are known to have excellent electronic conductivity and contribute to battery capacity and output characteristics. Further, from the viewpoint of cycle characteristics, it may be desirable that some of such transition elements are replaced by another metal element M¹.

"a", which is a molar ratio of Ni in formula (1), is 0.3≤a<1, however, it may for example be 0.30 or more, 0.40 or more, 0.50 or more, 0.60 or more, or 0.70 or more, and may for example be 0.90 or less, 0.80 or less, 0.70 or less, or 0.60 or less. A range of "a" can be set by selecting the lower and upper limits as in the above values. For example, the range of "a" may be set between 0.40 and 0.90, or between 0.50 and 0.80 mol% of atoms in the composition formula can be achieved by multiplying the molar ratio by 100. In this specification, the term "between" means between inclusive, that is "between" refers to a range that includes the numbers before and after the word "and".

"b", which is the molar ratio of Co in Formula (1), is 0 <b≤0.7, however, for example, it may be 0.10 or more, 0.15 or more, or 0.20 or more, and also may be 0.70 or less, 0.50 or less, 0.40 or less, 0.35 or less, 0.30 or less, or 0.20 or less. A range of "b" may be set by selecting the lower and upper limits as in the above values. For example, the range of "b" may be set between 0.10 and 0.40, or between 0.10 and 0.30.

"c", which is the molar ratio of Mn in Formula (1), is 0<c≤0.7, however, it may for example be 0.10 or more, or 0.15 or more, and may also be 0.70 or less, 0.50 or less, 0.30 or less, 0.25 or less, 0.20 or less, or 0.15 or less, for example. A range of "c" may be set by selecting the lower and upper limits as in the above values, and the range of "c" may be set between 0.10 and 0.20, for example.

The NCM type oxide represented by Formula (1) is not particularly limited, however, it may for example be LiNi_{0.33}Co_{0.33}Mn_{0.34}O₂, LiNi_{0.8}Co_{0.1}Mn_{0.1}O₂, LiNi_{0.6}Co_{0.2}Mn_{0.2}O₂, LiNi_{0.5}Co_{0.3}Mn_{0.2}O₂, LiNi_{0.33}Co_{0.31}Mn_{0.33}Mg0._{0.3}O₂, or LiNi_{0.33}Co_{0.31}Mn_{0.33}Zn0._{0.3}O₂. Among such, an NCM type acid compound with a composition such as LiNi_{0.8}Co_{0.1}Mn_{0.1}O₂, LiNi_{0.6}Co_{0.2}Mn_{0.2}O₂, and LiNi_{0.5}Co_{0.3}Mn_{0.2}O₂ may be preferable.

In the NCA-type oxide represented by Formula 2, similar to the NCM-type oxide, Ni and Co have excellent electronic conductivity, and from the viewpoint of cycle characteristics, it may be preferable that some of such transition elements are replaced by another metal element M². The NCA-type oxide is excellent in battery capacity and output characteristics. In addition, inclusion of Al imparts resistance to Alteration by moisture in atmosphere, and ensures its safety.

"d", which is the molar ratio of Ni in Formula 2, is 0.4≤d<1, and it may for example be 0.40 or more, 0.50 or more, 0.60 or more, or 0.70 or more and Also less than 1.0, 0.90 or less, 0.80 or less, 0.70 or less. It may be between 0.50 and 0.90, or between 0.60 and 0.80.

"e", which is the molar ratio of Co in Formula 2, is 0<e≤0.6, and may for example be 0.10 or more, 0.15 or more, or 0.20 or more, and also 0.60 or less, 0.40 or less, 0.35 or less, 0.30 or less, or 0.20 or less. A range of "e" can be set by selecting the lower and upper limits as in the above values, and may for example be between 0.10 and 0.40, between 0.10 and 0.30, or between 0.10 and 0.20.

"f", which is the molar ratio of Al in Formula 2, is 0<f≤0.3, and may for example be 0.01 or more, 0.02 or more, or 0.05 or more, and may also be 0.30 or less, 0.20 or less, 0.15 or less, or 0.10 or less. A range of "f" can be set by selecting the lower and upper limits as in the above values, and may for example be between 0.01 and 0.10.

The NCA type oxide represented by Formula (2) is not particularly limited, however, it may for example be LiNi_{0.33}Co_{0.33}Al_{0.334}O₂, LiNi_{0.8}Co_{0.1}Al_{0.1}O₂, LiNi_{0.6}Co_{0.2}Al_{0.2}O₂, LiNi_{0.5}Co_{0.3}Al_{0.2}O₂, LiNi_{0.8}Co_{0.15}Al_{0.03}Mg_{0.03}O₂, or LiNi_{0.8}Co0.₁₅Al_{0.03}Zn_{0.03}O₂.

The NCM- and NCA-type compounds are generally spherical or irregularly shaped particles, depending on the manufacturing method, or the like. An average particle diameter (D₅₀, primary particle diameter) of NCM- and NCA-type compounds is not particularly limited. It is set appropriately within a range within which dispersion that obtains desired properties in the positive electrode composite layer 12 is realized. For example, it may be between 50 nm and 100 µm, between 1 µm and 100 µm, between 1 µm and 50 µm, or between 1 µm and 20 µm. The average particle diameter D₅₀ may be measured as the particle diameter corresponding to a cumulative 50 vol% from a smaller particle diameter (fine particle side) in a volume-based particle size distribution (integrated distribution) obtained based on a laser diffraction and scattering method.

The NCM-type and NCA-type oxides may be used as the layered rocksalt type oxide, and other known lithium-containing transition metal oxides can also be used.

NCM-type and NCA-type oxides may be used in combination as needed. They may be used alone, mixed, or composited as needed.

### (Olivine type compound)

As the olivine type compound, one, or two or more compounds selected from those represented by oxides with the composition formula (3) as below may be used. This type of lithium manganese iron phosphate is of the olivine type, and can contribute to safety because of its excellent structural stability. Further, it may also contribute to an increase in energy density per unit area.

Li_{g}MnₕFeᵢM³_{y}PO₄ ... (3)

(where M³ represents one, or two or more elements selected from Mg, Al, Ti, Cu, Zn, Nb, Co, Ni, Ca, Sr, Y, Zr, Mo, Ba, Pb, Bi, La, Ce, Nd, and Gd; and g, h, i, and y represent numbers satisfying 0≤g≤1.2, 0≤h≤1.2, and 0≤i≤1.2, provided that h+i is not 0, 0≤y≤0.3, and g+(valence of Mn)×h+(valence of Fe)×i+(valence of M³)×y=3 in Formula (3)).

The olivine type compound represented by Formula (3) includes MFP, LMP, and LFP. In Formula (3), M³ is preferably Mg, Al, Ti, Zn, Nb, Co, Zr, or Gd from the viewpoint of increasing energy density per unit volume.

Further, "g", which is the molar ratio of Li in Formula (3), is 0 or more and 1.2 or less, and may for example between 0.60 and 1.20, between 0.65 and 1.15, or between 0.70 and 1.10.

"h", which is the molar ratio of Mn in Formula (3), is between 0 and 1.2. For LMFP, "h" is between 0.20 and 0.70, for example, or may be between 0.20 and 0.60, between 0.20 and 0.50, or between 0.20 and 0.40, for example.

"i", which is the molar ratio of Fe in Formula (3), is between 0 and 1.2. For LMFP, for example, it may be between 0.40 and 0.90, or may be between 0.40 and 0.80, or between 0.60 and 0.80.

"y", which is the molar ratio of M³ in Formula (3), is between 0 and 0.3, for example, and may be between 0 and 0.20, between 0 and 0.15, or between 0 and 0.10.

The olivine type compound is not particularly limited, but may include, for example, LiMnPO₄, LiFePO₄, LiMn_{0.2}Fe_{0.8}PO₄, LiMn_{0.3}Fe_{0.7}PO₄, LiMn_{0.4}Fe_{0.6}PO₄, LiMn_{0.5}Fe_{0.5}PO₄, LiMn_{0.6}Fe_{0.4}PO₄, or Li_{1.2}Mn_{0.53}Fe_{0.37}PO₄.

The olivine type compound such as LMFP is generally spherical or irregularly shaped particles, depending on the manufacturing method, or the like. An average particle diameter (primary particle diameter) of the olivine type compound such as LMFP is not particularly limited. It is set appropriately within a range within which dispersion that obtains desired properties in the positive electrode composite layer 12 is realized. For example, the average particle diameter of the olivine type compound such as LMFP may be between 1 nm and 10 µm, between 1 nm and 2 µm, between 1 nm and 1 µm, or between 1 nm and 0.5 µm. The small primary particle diameter can improve lithium-ion diffusivity within the particles. Further, the olivine type compound such as LMFP may also be granulates, in which the primary particles are granulated. The average particle diameter of LMFP may be measured as the D₅₀ in a volume-based particle size distribution (integrated distribution) obtained based on the laser diffraction and scattering method.

In addition to the positive electrode active material, the positive electrode composite layer 12 may further contain binders, conductivity aids, and other additives as needed. The binders may include one, or two or more of fluororesins such as polytetrafluoroethylene (PTFE), polyvinylidene fluoride (PVDF), polyacrylonitrile (PAN), polyimide, acrylic resin, polyolefin, etc. Further, as the conductivity aids, one, or two or more of carbon materials such as carbon black, acetylene black, Ketjen black, graphite, carbon nanotubes, etc. may be exemplified.

The positive electrode 4 and the positive electrode composite layer 12 may be produced by feeding a composite slurry, prepared by mixing the positive electrode active material, the binder, and the conductivity aid with a suitable solvent, to the positive electrode current collector 10 by a known method, followed by drying, pressing, and other processes.

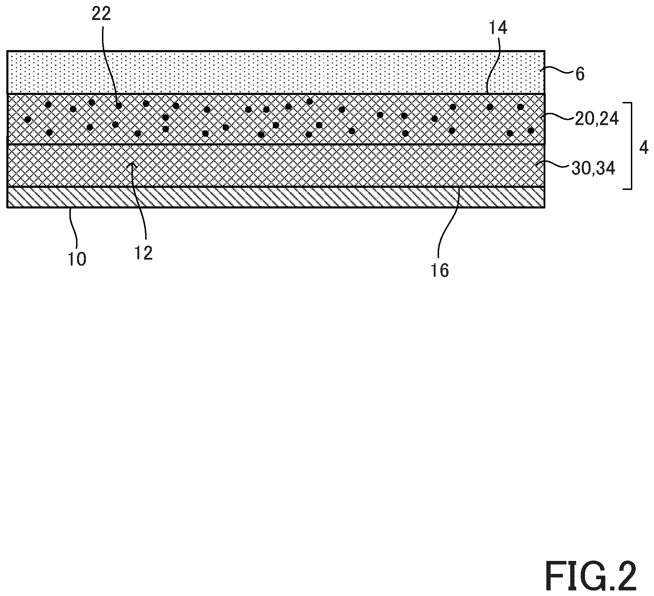

Referring now to FIG. 2, the uneven distribution of the layered rocksalt type oxide in the positive electrode composite layer 12 will be explained. In FIG. 2, the layered rocksalt type oxide is shown as particles 22 for convenience of explanation. The positive electrode composite layer 12 comprises a region 20, which contains a high concentration of the particles 22 of the layered rocksalt type oxide, on a side closer to a surface 14, which is a surface on an opposite side of a surface 16 facing the positive electrode current collector 10. The surface 14 is an example of a first surface disclosed herein, and the surface 16 is an example of a second surface disclosed herein. The region 20 is an example of a first region disclosed herein.

By unevenly distributing the layered rocksalt type oxide so that it is densely localized toward the surface 14, that is, on the separator 6 side in the secondary battery 2, electrons in the electrolyte can be preferentially received or released by the layered rocksalt type oxide, and can be quickly moved within the positive electrode composite layer 12. As a result, low electron conductivity of the olivine type compound such as LMFP, for example, can effectively be compensated for.

Having such a region 20 means that the particles 22 are unevenly distributed in a thickness direction of the positive electrode composite layer 12 such that the particles 22 are densely distributed at a higher concentration on the side closer to the surface 14 than on a side closer to the surface 16. Thus, in addition to a case in which the layered rocksalt type oxide is contained only on the side closer to the surface 14, there are cases in which the layered rocksalt type oxide is contained at a first concentration on the side closer to the surface 14 and at a second concentration lower than the first concentration on the side closer to the surface 16. On the other hand, the region 20 may be a region in which the concentration of the layered rocksalt type oxide continuously or stepwise increases toward the surface 14 of the positive electrode composite layer 12. Such region 20 may extend over the entire thickness of the positive electrode composite layer 12.

Further, the region 20 is preferably provided very close to the surface 14 from the viewpoint of electronic conductivity, and is preferably provided in the positive electrode composite layer 12 including the surface 14. As for the distribution of the particles 22 in the thickness direction of the positive electrode composite layer 12, the surface 14 or an area including the surface 14 preferably has the highest concentration.

The region 20 is a region that contains the olivine type compound as well as the layered rocksalt type oxide. The region 20 does not necessarily have to be layered in the positive electrode composite layer 12, but it is preferred that it is configured in a layered structure over approximately the entire surface 14 of the positive electrode composite layer 12, as described below. By configuring as such, the advantageous effect of having the uneven distribution of the layered rocksalt type oxide may be obtained over the entirety of the positive electrode 4.

A thickness of the region 20 is not particularly limited, but may be 5% or more, 10% or more, 15% or more, 20% or more, 30% or more, or 40% or more of a thickness of the positive electrode composite layer 12, and can also be 60% or less, 50% or less, or 40 or less of the thickness of the positive electrode composite layer 12. The thickness of the region 20 may be between 5% and 50%, or between 10% and 50% of the thickness of the positive electrode composite layer 12.

As shown in FIG. 2, in addition to the region 20, the positive electrode composite layer 12 may comprise, on the side closer to the surface 16, a region 30 that does not contain the layered rocksalt type oxide or contains the layered rocksalt type oxide at a second concentration. The region 30 is a region that contains the olivine type compound and also contains no or low concentration of the layered rocksalt type oxide. The region 30 does not necessarily have to be layered in the positive electrode composite layer 12, but it is preferred that it is configured in a layered structure over approximately the entire surface 16. By configuring as such, the advantageous effect of having the uneven distribution of the layered rocksalt type oxide may be obtained over the entirety of the positive electrode 4. Further, the thickness of the region 30 is not particularly limited, but is generally the thickness remaining of the thickness of the region 20 in the thickness direction of the positive electrode composite layer 12. The region 30 is an example of a second region disclosed herein.

A mass ratio of the layered rocksalt type oxide to the olivine type compound in the region 20 is not particularly limited, as long as the layered rocksalt type oxide is more densely concentrated on the side closer to the surface 14. In the region 20 where the particles 22 are contained in generally constant concentrations, a content of the layered rocksalt type oxide relative to the total mass of layered rocksalt type oxide and the olivine type compound is, for example, from 5 to 40 mass%, from 5 to 30 mass%, or from 5 to 20 mass%.

The region 20 may be configured of two or more regions with different concentrations of the layered rocksalt type oxide in the thickness direction of the positive electrode composite layer 12.

In a case where the region 20 has a concentration of the particles 22 that varies continuously or stepwise along the thickness direction, the content of the layered rocksalt type oxide relative to the total mass is configured to increase from 0 mass% to 40 mass%, from 0 mass% to 30 mass%, or from 0 to 20 mass% in the direction of thickness of positive electrode composite layer 12.

On the other hand, in the region 30, the layered rocksalt type oxide suffices by having a lower concentration than in the region 20. For example, the content of the layered rocksalt type oxide relative to the total mass of layered rocksalt type oxide and olivine type compound is, for example, from 0 to 30 mass%, from 0 to 20 mass%, from 0 to 10 mass%, from 0 to 5 mass%, or 0 mass%.

The layered rocksalt type oxide to the total mass of the layered rocksalt type oxide and the olivine type compound in the positive electrode composite layer 12 may be between 2.5 and 15 mass% or between 2.5 and 10 mass%. By unevenly distributing the layered rocksalt type oxide on the side closer to face 14, good output characteristics may be obtained even if the content of layered rocksalt type oxide in the positive electrode composite layer 12 is reduced. Since the layered rocksalt type oxide contains cobalt and other elements, it is advantageous to lower the content.

The positive electrode composite layer 12 with the particles 22 of the layered rocksalt type oxide densely distributed on the surface 14 side may be produced by stacking slurries with different concentrations of layered rocksalt type oxide. For example, a composite slurry containing no or low concentration of the layered rocksalt type oxide and containing the olivine type compound as its positive electrode active materials is applied to the positive electrode collector 10 to form a layer 34 corresponding to the region 30. Subsequently, a composite slurry containing a higher concentration of the layered rocksalt type oxide and the olivine type compound than the previously applied composite slurry is applied over layer 34 to form a layer 24 corresponding to the region 20. The layers 34 and 24 may be dried and pressed as a batch or dried and pressed individually.

As such, by unevenly distributing the layered rocksalt type oxide to be densely localized on the separator 6 side of the secondary battery, that is, on the electrolyte side, the layered rocksalt type oxide with superior electron conductivity can preferentially conduct electron receiving reactions, and the electron conduction on the separator 6 side may be performed quickly. As a result, for example, a small amount of the layered rocksalt type oxide with excellent electron conductivity can compensate for the low electron conductivity of the olivine type compound such as LMFP to improve the output characteristics, especially the short-term output characteristics.

### (Secondary Battery)

The secondary battery 2 disclosed herein comprises a positive electrode 4, a negative electrode 8, and a separator 6. According to this secondary battery 2, since the positive electrode 4 is provided with excellent input/output characteristics, a secondary battery with excellent input/output characteristics can be provided.

The secondary battery 2 comprises the positive electrode 4, the negative electrode 8, an electrolyte (liquid or solid), and the separator 6. For the negative electrode 8, the electrolyte, and the separator 6, known materials and compositions may be applied as appropriate without special consideration. For example, lithium metal, graphite, silicon-based (Si, SiOx), lithium titanate, or carbon materials such as amorphous carbon may be used for the negative electrode 8. The electrolyte solution is, for example, the support salt dissolved in an organic solvent. The organic solvent is not limited to organic solvents normally used in electrolyte solutions for lithium-ion batteries. For example, carbonates, halogenated hydrocarbons, ethers, ketones, nitriles, lactones, oxolane compounds, etc. may be used. The type of support salt is not limited, but known organic salts such as LiPF₆, LiBF₄, or their derivatives may be used. For example, a porous synthetic resin membrane, especially a porous membrane of polyolefin polymer (polyethylene (PE), polypropylene (PP)), may be used as the separator 6. As for the solid electrolyte, any known solid electrolyte may be used as long as it electrically insulates the positive and negative electrodes and exhibits high lithium-ion conductivity.

The shape of the secondary battery 2 having the above configuration is not restricted, and may be of various shapes such as coin-shaped, cylindrical, square, etc., or an irregular shape sealed in a laminated outer body.

### Examples

Examples embodying the disclosure herein are described below, but the disclosure herein is not limited to the following examples.

### (1) Preparation of positive electrode

A positive electrode composite slurry was prepared using an olivine type compound, LMFP (average particle diameter 0.5 µm) as a first positive electrode active material and a layered rocksalt type oxide, NCM (average particle diameter 10 µm) as a second positive electrode active material to prepare the positive electrode.

As LMFPs, three types with different molar ratios (%) of Mn and Fe (LiMn_{0.2}Fe_{0.8}, LiMn_{0.6}Fe_{0.4}, and LiMn_{0.6}Fe_{0.4}, with 20 mol%, 40 mol%, and 60 mol% Mn, respectively) were used. Two types of NCMs with different molar ratios of Ni, Co, and Mn were used (LiNi_{0.8}Co_{0.1}Mn_{0.1}O₂, LiNi_{0.5}Co_{0.3}Mn_{0.2}O₂, Ni, Co, and Mn molar ratios of 80mol%/10mol%/10mol% and 50 mol%/30 mol%/20 mol%).

Using three types of first active materials (LMFP) and three types of second active materials (NCM), carbon nanotubes (CNT) as a conductivity aid and polyvinylidene fluoride (PVDF) as a binder, several types of slurry I and slurry II were prepared for the collector side and separator side, respectively. Each slurry was prepared as a slurry with a solvent by fixing the contents of CNT and PVDF to 1.5 mass% and 4.0 mass%, respectively, and blending the remainder to the combination and mass ratio (%) of the first active material and second active material shown in Table 1.

**Table 1**

| Type | Current collector foil side (Slurry) | | | | | | Separator side (Slurry) | | | | | | SOC 60% 10sec. IV Resistance Ω |
|---|---|---|---|---|---|---|---|---|---|---|---|---|---|
| | Olivine type compound LMFP | | Layered rocksalt type oxide NCM | | | | Olivine type compound LMFP | | Layered rocksalt type oxide NCM | | | | |
| | Mn ratio mol% | Content wt% | Ni mol% | Co mol% | Mn mol% | Content wt% | Mn ratio mol% | Content wt% | Ni mol% | Co mol% | Mn mol% | Content wt% | |
| Example 1 | 60 | 100 | - | - | - | - | 60 | 80 | 80 | 10 | 10 | 20 | 1.1 |
| Example 2 | 60 | 100 | - | - | - | - | 60 | 80 | 50 | 30 | 20 | 20 | 1.2 |
| Example 3 | 40 | 100 | - | - | - | - | 40 | 80 | 50 | 30 | 20 | 20 | 1.1 |
| Example 4 | 20 | 100 | - | - | - | - | 20 | 80 | 50 | 30 | 20 | 20 | 1.1 |
| Example 5 | 60 | 100 | - | - | - | - | 60 | 95 | 80 | 10 | 10 | 5 | 1.3 |
| Comparative Example 1 | 60 | 80 | 60 | 20 | 20 | 20 | 60 | 80 | 60 | 20 | 20 | 20 | 2.6 |
| Comparative Example 2 | 60 | 80 | 80 | 10 | 10 | 20 | 60 | 100 | - | - | - | - | 2.5 |

The positive electrodes with positive electrode composite layers of Examples 1 to 5 and Comparative Examples 1 and 2 were prepared using the slurry I and the slurry II in the combinations shown in Table 1. First, a prescribed amount of the slurry I was doctor-bladed onto a 30 *µ* m thick Al foil to a thickness of 13 mg/cm², and then the slurry II was doctor-bladed over the slurry I in the same amount as above to a thickness of 13 mg/cm². Each positive electrode was produced by drying at 100°C for 10 minutes and being pressed to a density of 2.3 g/cc.

### (2) Fabrication of negative electrode

Artificial graphite (average particle 22 µm) was used as the negative electrode active material, and styrene butadiene rubber (SBR) and carboxymethyl cellulose (CMC) were used as binders, and a negative electrode composite slurry was prepared by mixing active materials:SBR:CMC at a ratio of 96:3:1 (mass%). This negative electrode composite slurry was doctor-bladed onto a 15 µm Cu foil to obtain a thickness of 13 mg/cm² on one side (ratio of positive electrode capacity to anode capacity: 1.1). It was then dried at 100°C for 10 minutes and pressed to a density of 1.25 g/cc.

### (3) Preparation of secondary battery cells

A PP/PE/PP 3-layer laminate (16 µm) was used as the separator, and laminated cells were made by laminating the positive electrode, separator, and negative electrode of Examples 1 to 5 and Comparative Examples 1 and 2. 1.1M LiPF₆ (ethylene carbonate (EC): dimethyl carbonate (DMC): ethyl methyl carbonate (EMC) (30:40:30 (by volume)) was used as the electrolyte, and the cell confining pressure was 500 kPa.

### (4) Activation and characteristic evaluation

An initial charging current was set with a constant-current-constant-voltage method, and each battery was activated by constant-current charging to 4.30 V at a current value of 0.1 C, constant-voltage charging until 3 hours of constant-voltage charging time, and discharging to 3.0 V at a current value of 0.1 C by the constant-current method. After the activation process, the battery was charged to 60% SOC at a current value of 0.1C using the constant-current-constant-voltage method, and the 10-second IV resistance was calculated from the cell voltage after 10 seconds of discharge at 1.5C. The results are shown in Table 1.

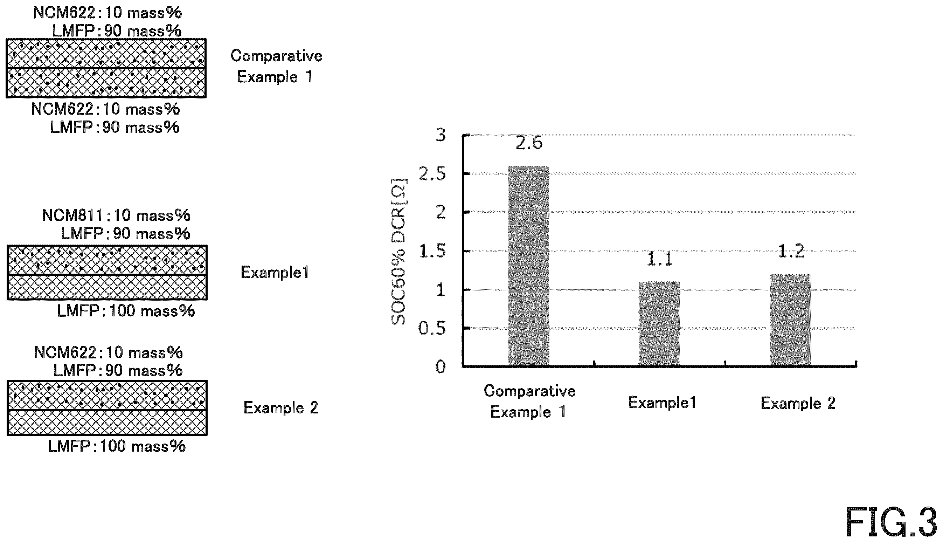

Further, FIG. 3 also illustrates the dispersion state of the second active material, NCM, in Examples 1 and 2 and Comparative Examples 1 and 2.

As shown in Table 1 and FIG. 3, Examples 1 to 4 are configured such that the current collector foil side contains only the LMFP and the separator side contains 20 mass% of NCM (the entire positive electrode composite layer contains 10 mass% of NCM, all of which is distributed on the separator side). In all of these cells, the 10-second IV resistance values were between 1.1 and 1.2 Ω.

In contrast, Comparative Example 1 configures the collector foil side and the separator side with the same composition (the entire positive electrode composite layer contains 10 mass% of NCM, all of which is uniformly distributed on the collector foil side and the separator side), and the 10 sec IV resistance was remarkably high at 2.6Ω. Further, in Comparative Example 2, the current collector foil side is composed of 20 mass% LCM and the separator side contains only LMFP (10 mass% NCM in the entire positive electrode composite layer, all of which is distributed on the current collector side), and the 10-second IV resistance was remarkably high at 2.5 Q. These results indicate that by unevenly distributing NCM on the separator side, the reaction of NCM, which has excellent electronic conductivity, became dominant, resulting in a reduced 10-second IV resistance value.

Further, the results of Examples 1 and 2 show that the molar ratios of Ni, Co, and Mn in LCM are sufficiently effective in the range of 80 mol%/10 mol%/10 mol% to 50 mol%/30 mol%/20 mol%, respectively.

Further, Examples 3 and 4 are different from Examples 1 and 2 only in the Mn ratio of LMFP used therein. Since the 10 sec IV resistance values of Examples 1 and 2 and Examples 3 and 4 are equivalent, it was found that the Mn ratio of LMFP is effective enough to lower the resistance value if the Mn ratio of LMFP is 20 mol% or more and 60 mol% or less.

In Example 5, the current collector foil side is configured to contain only LMFP, and the separator side is configured to contain 5 mass% NCM (the entire positive electrode composite layer contains 2.5 mass% NCM, all of which is distributed on the separator side). In this cell as well, the 10-second IV resistance was 1.3 Ω. This indicates that even 5 mass% of LCM distributed on the separator side (2.5 mass% in the entire positive electrode composite layer) is effective enough to lower the 10-second IV resistance.

The above results indicate that when the olivine type compound such as LMFP and the layered oxides such as LCM are used as the positive electrode active materials, the input/output characteristics can be effectively improved by unevenly distributing the layered oxide at a higher concentration on the separator side of the positive electrode composite layer, so that the reaction by the layered oxides becomes dominant on the separator side. The result is that the input/output characteristics can effectively be improved.

The disclosure herein comprises the following configurations.
[1] A positive electrode for a lithium-ion secondary battery, the positive electrode comprising:
   a positive electrode current collector layer; and
   a positive electrode composite layer containing an olivine-type compound and a layered rocksalt-type oxide as its positive electrode active materials,
   wherein the positive electrode composite layer comprises a first region on a side that is closer to a first surface of the positive electrode composite layer, the first surface being opposite to a second surface of the positive electrode composite layer facing the positive electrode current collector layer, and
   the first region contains the layered rocksalt-type oxide at a higher concentration.
[2] The positive electrode according to [1], wherein the positive electrode composite layer comprises the first region in a form of a layer.
[3] The positive electrode according to [1], wherein
   the positive electrode composite layer comprises a second region on a side that is closer to the second surface of the positive electrode composite layer, the second surface being a surface of the positive electrode composite layer facing the positive electrode current collector layer, and
   the second region does not contain the layered rocksalt-type oxide or contains the layered rocksalt-type oxide at a lower concentration.
[4] The positive electrode according to [2], wherein
   the positive electrode composite layer comprises a second region on a side that is closer to the second surface of the positive electrode composite layer, the second surface being a surface of the positive electrode composite layer facing the positive electrode current collector layer, and
   the second region does not contain the layered rocksalt-type oxide or contains the layered rocksalt-type oxide at a lower concentration.
[5] The positive electrode according to any one of [1] to [4], wherein the layered rocksalt-type oxide contains an oxide represented by Formula (1) or (2):

   LiNiₐCo_{b}Mn_{c}M¹_{w}O₂ (1)

   (where M¹ represents one, or two or more elements selected from Mg, Ti, Nb, Fe, Cr, Si, Al, Ga, V, Zn, Cu, Sr, Mo, Zr, Sn, Ta, W, La, Ce, Pb, Bi, and Ge; and a, b, c, and w represent numbers that satisfy 0.3≤a<1, 0<b≤0.7, 0<c≤0.7, 0≤w≤0.3, and 3a+3b+3c+(valence of M¹)×w=3 in Formula (1))

   LiNi_{d}Co_{c}Al_{f}M²ₓO₂ (2)

   (where M² represents one, or two or more elements selected from Mg, Ti, Nb, Fe, Cr, Si, Ga, V, Zn, Cu, Sr, Mo, Zr, Sn, Ta, W, La, Ce, Pb, Bi, and Ge; and d, e, f, and x represent numbers satisfying 0.4≤d<1, 0<e≤0.5, 0<f≤0.3, 0≤x≤0.3, and 3d+3e+3f+(valence of M²)×x=3 in Formula (2)).
[6] The positive electrode according to [5], wherein the layered rocksalt type oxide contains an oxide represented by Formula (1).
[7] The positive electrode according to [6], wherein the oxide represented by Formula (1) contains 50 mol% or more and 80 mol% or less of Ni.
[8] The positive electrode according to any one of [1] to [7], wherein the olivine-type compound contains a compound represented by Formula (3):

   Li_{g}MnₕFeᵢM³_{y}PO₄ (3)

   (where M³ represents one or more elements selected from Mg, Al, Ti, Cu, Zn, Nb, Co, Ni, Ca, Sr, Y, Zr, Mo, Ba, Pb, Bi, La, Ce, Nd, and Gd; and g, h, i, and y represent numbers satisfying 0≤g≤1.2, 0≤h≤1.2, and 0≤i≤1.2, provided that h+i is not 0, 0≤y≤0.3, and g+(valence of Mn)×h+(valence of Fe)×i+(valence of M³)×y=3. in Formula (3)).
[9] The positive electrode according to [8], wherein the olivine-type compound contains 20 mol% or more of Mn.
[10] A lithium-ion secondary battery comprising:
   a positive electrode according to any one of [1] to [9];
   a negative electrode; and
   a separator.

While specific examples of the present disclosure have been described above in detail, these examples are merely illustrative and place no limitation on the scope of the patent claims. The technology described in the patent claims also encompasses various changes and modifications to the specific examples described above. The technical elements explained in the present description or drawings provide technical utility either independently or through various combinations. The present disclosure is not limited to the combinations described at the time the claims are filed. Further, the purpose of the examples illustrated by the present description or drawings is to satisfy multiple objectives simultaneously, and satisfying any one of those objectives gives technical utility to the present disclosure.

## Claims

1. A positive electrode 4 for a lithium-ion secondary battery 2, the positive electrode 4 comprising:
a positive electrode current collector layer 10; and
a positive electrode composite layer 12 containing an olivine-type compound and a layered rocksalt-type oxide as its positive electrode active materials,
wherein the positive electrode composite layer comprises 12 a first region 20 on a side that is closer to a first surface 14 of the positive electrode composite layer 12, the first surface 14 being opposite to a second surface 16 of the positive electrode composite layer 12 facing the positive electrode current collector layer 10 and
the first region 20 contains the layered rocksalt-type oxide at a higher concentration.

2. The positive electrode 4 according to claim 1, wherein the positive electrode composite layer 12 comprises the first region 20 in a form of a layer.

3. The positive electrode 4 according to claim 1, wherein
the positive electrode composite layer 12 comprises a second region 30 on a side that is closer to the second surface 16 of the positive electrode composite layer 12, and
the second region 30 does not contain the layered rocksalt-type oxide or contains the layered rocksalt-type oxide at a lower concentration.

4. The positive electrode 4 according to claim 2, wherein
the positive electrode composite layer 12 comprises a second region 30 on a side that is closer to the second surface 16 of the positive electrode composite layer 12, and
the second region 30 does not contain the layered rocksalt-type oxide or contains the layered rocksalt-type oxide at a lower concentration.

5. The positive electrode 4 according to any one of claims 1 to 4, wherein the layered rocksalt-type oxide contains an oxide represented by Formula (1) or (2):
LiNiₐCO_{b}Mn_{c}M¹_{w}O₂ (1)
(where M¹ represents one, or two or more elements selected from Mg, Ti, Nb, Fe, Cr, Si, Al, Ga, V, Zn, Cu, Sr, Mo, Zr, Sn, Ta, W, La, Ce, Pb, Bi, and Ge; and a, b, c, and w represent numbers that satisfy 0.3≤a<11, 0<b≤0.7, 0<c≤0.7, 0≤w≤0.3, and 3a+3b+3c+(valence of M¹)×w=3 in Formula (1))
LiNi_{d}Co_{c}Al_{f}M²ₓO₂ (2)
(where M² represents one, or two or more elements selected from Mg, Ti, Nb, Fe, Cr, Si, Ga, V, Zn, Cu, Sr, Mo, Zr, Sn, Ta, W, La, Ce, Pb, Bi, and Ge; and d, e, f, and x represent numbers satisfying 0.4≤d<1, 0<e≤0.5, 0<f≤0.3, 0≤x≤0.3, and 3d+3e+3f+(valence of M²)×x=3 in Formula (2)).

6. The positive electrode according to claim 5, wherein the layered rocksalt type oxide contains an oxide represented by Formula (1).

7. The positive electrode 4 according to claim 6, wherein the oxide represented by Formula (1) contains 50 mol% or more and 80 mol% or less of Ni.

8. The positive electrode 4 according to any one claims 1 to 7, wherein the olivine-type compound contains a compound represented by Formula (3):
Li_{g}MnₕFeᵢM³_{y}PO₄ (3)
(where M³ represents one or more elements selected from Mg, Al, Ti, Cu, Zn, Nb, Co, Ni, Ca, Sr, Y, Zr, Mo, Ba, Pb, Bi, La, Ce, Nd, and Gd; and g, h, i, and y represent numbers satisfying 0≤g≤1.2, 0≤h≤1.2, and 0≤i≤1.2, provided that h+i is not 0, 0≤y≤0.3, and g+(valence of Mn)×h+(valence of Fe)×i+(valence of M³)×y=3. in Formula (3)).

9. The positive electrode 4 according to claim 8, wherein the olivine-type compound contains 20 mol% or more of Mn.

10. A lithium-ion secondary battery 2 comprising:
a positive electrode 4 according to any one of claims 1 to 9;
a negative electrode 8; and
a separator 6.
